# EUROPEAN PATENT APPLICATION

(11) **EP 4 794 211 A1**
(43) Date of publication of application: **19.08.2026**
(21) Application number: 24890027.6
(22) Date of filing: 23.05.2024
(51) Int. Cl.: H04B 7/00, H04L 25/00

(54) **RECONFIGURABLE INTELLIGENT SURFACE, SIGNAL PROCESSING METHOD, AND DEVICE AND MEDIUM**

(30) Priority: 17.11.2023 CN 202311551825
(71) Applicant: ZTE CORPORATION, Shenzhen, Guangdong 518057 (CN)
(72) Inventor: DUAN, Xiangyang, Shenzhen, Guangdong 518057 (CN); YANG, Jun, Shenzhen, Guangdong 518057 (CN); CHEN, Yijian, Shenzhen, Guangdong 518057 (CN); HU, Liujun, Shenzhen, Guangdong 518057 (CN)
(74) Representative: Savi, Massimiliano
(86) International application number: PCT/CN2024/095005
(87) International publication number: WO 2025/102656

(57) **Abstract**

The present disclosure provides a Reconfigurable Intelligent Surface (RIS), a signal processing method, a device, and a medium. The RIS includes an electromagnetic unit array, a signal acquisition module, and a signal measurement module. The electromagnetic unit array includes multiple target electromagnetic units. The signal acquisition module includes at least one sub-acquisition module which includes an RF channel and multiple RF switches. The RF channel is connected to the target electromagnetic units through the RF switches. The signal measurement module is configured to perform signal measurement on the incident signal of the target electromagnetic unit connected to the RF channel. Each RF switch sequentially switches its on/off state by utilizing a periodic characteristic of an incident signal in the time domain, thereby performing signal measurement on the incident signal from the target electromagnetic unit connected to the RF channel to obtain incident signal measurement data.

## Description

### CROSS-REFERENCE TO RELATED APPLICATIONS

The present disclosure is based on and claims priority to Chinese Patent Application No. CN202311551825.8, filed on November 17, 2023, entitled "Reconfigurable Intelligent Surface, Signal Processing Method, and Device and Medium," the entire disclosure of which is incorporated herein by reference.

### TECHNICAL FIELD

The present disclosure relates to the field of wireless communication technologies, and in particular, to a Reconfigurable Intelligent Surface, a signal processing method, a device, and a medium.

### BACKGROUND

Wireless communication in high-frequency bands has a larger communication bandwidth, which can significantly increase the capacity of communication systems. However, due to the disadvantages of high-frequency band signals, such as high path loss and being easily blocked, the coverage range of high-frequency base stations is limited. In response, the industry has proposed a Reconfigurable Intelligent Surface (RIS) for controlling the wireless environment. By dynamically adjusting the states of the electromagnetic units on the Reconfigurable Intelligent Surface, the wireless signals from the base station can be reflected or transmitted in specified directions, thereby enhancing the signal coverage area.

Current Reconfigurable Intelligent Surface usually uses passive, reflective or transmissive units which cannot perform signal measurement. Furthermore, to improve the reflection link gain, Reconfigurable Intelligent Surface designs often employ large-scale arrays, which further increases the difficulty of channel measurement. Therefore, how to perform signal measurement on a Reconfigurable Intelligent Surface has become a technical problem which needs to be solved.

### SUMMARY

Embodiments of the present disclosure provide a Reconfigurable Intelligent Surface, a signal processing method, a device, and a medium, which are capable of implementing signal measurement on the Reconfigurable Intelligent Surface.

In a first aspect in accordance to the present disclosure, an embodiment provides a Reconfigurable Intelligent Surface, which includes: an electromagnetic unit array, including a plurality of target electromagnetic units; a signal acquisition module, including at least one sub-acquisition module, each sub-acquisition module including an RF channel and a plurality of RF switches, the RF channel being connected to the target electromagnetic units through the RF switches, the RF switches being configured to sequentially turn on to switch the target electromagnetic unit connected to the RF channel, each RF switch switching its on state or off state in sequence according to a preset time interval, the preset time interval being determined by a carrier period of an incident signal incident on the target electromagnetic unit; a signal measurement module, configured to measure the incident signal on the target electromagnetic unit connected to the RF channel, to obtain incident signal measurement data.

In a second aspect in accordance to the present disclosure, an embodiment provides a signal processing method, which is applied to a Reconfigurable Intelligent Surface. The Reconfigurable Intelligent Surface includes an electromagnetic unit array and a signal acquisition module. The electromagnetic unit array includes a plurality of target electromagnetic units. The signal acquisition module includes at least one sub-acquisition module. Each sub-acquisition module includes an RF channel and a plurality of RF switches. The RF channel is connected to the target electromagnetic units via the RF switches. The method includes: controlling the RF switches to sequentially turn on according to a preset time interval to switch the target electromagnetic unit connected to the RF channel, the time interval for switching the on state or off state of the RF switches being determined according to a carrier period of an incident signal incident on the target electromagnetic unit; acquiring the incident signal of the target electromagnetic unit connected to the RF channel; and measuring the acquired incident signal to obtain incident signal measurement data.

In a third aspect in accordance to the present disclosure, an embodiment provides a communication device, which includes: one or more processors; a memory, having one or more programs stored thereon. The one or more programs, when executed by the one or more processors, cause the one or more processors to implement the signal processing method according to the second aspect.

In a fourth aspect in accordance to the present disclosure, an embodiment provides a computer-readable storage medium. The computer-readable storage medium stores a computer program. When the computer program is executed by a processor, the signal processing method according to the second aspect is implemented.

### DESCRIPTION OF DRAWINGS

The accompanying drawings are provided to facilitate a further understanding of the technical schemes of the present disclosure, constitute a portion of the description, and together with the embodiments of the present disclosure, serve to explain the technical schemes of the present disclosure, and do not limit the technical scheme of the present disclosure.
FIG. 1 is a structural schematic diagram of a module of a Reconfigurable Intelligent Surface according to an embodiment of the present disclosure;
FIG. 2 is a structural schematic diagram of another module of a Reconfigurable Intelligent Surface according to an embodiment of the present disclosure;
FIG. 3 is a structural schematic diagram of an electromagnetic unit array according to an embodiment of the present disclosure;
FIG. 4 is a structural schematic diagram illustrating the connection between a signal acquisition module and an electromagnetic unit array provided by an embodiment of the present disclosure;
FIG. 5A is a schematic diagram of the switching state of the RF switch in FIG. 4 at time t1;
FIG. 5B is a schematic diagram of the switching state of the RF switch in FIG. 4 at time t2;
FIG. 5C is a schematic diagram of the switching state of the RF switch in FIG. 4 at time t3;
FIG. 6A is a schematic diagram of the distribution of target electromagnetic units on an electromagnetic unit array according to an embodiment of the present disclosure;
FIG. 6B is a schematic diagram of the distribution of target electromagnetic units on an electromagnetic unit array according to an embodiment of the present disclosure;
FIG. 6C is a schematic diagram of the distribution of target electromagnetic units on an electromagnetic unit array according to an embodiment of the present disclosure;
FIG. 7 is a schematic diagram of a spatial structure of a Reconfigurable Intelligent Surface according to an embodiment of the present disclosure;
FIG. 8 is a schematic flowchart of a signal processing method according to an embodiment of the present disclosure;
FIG. 9 is a schematic flowchart of another signal processing method according to an embodiment of the present disclosure;
FIG. 10 is a schematic flowchart of sub-steps of step S210 in FIG. 9;
FIG. 11 is another schematic flowchart of sub-steps of step S210 in FIG. 9;
FIG. 12 is a schematic structural diagram of an electronic device according to an embodiment of the present disclosure.

### DETAILED DESCRIPTION

To enable those skilled in the art to better understand the technical scheme of the present disclosure, the technical schemes provided by the present disclosure are described in detail below with reference to the accompanying drawings.

Embodiments will be described more fully hereinafter with reference to the accompanying drawings, but the embodiments may be embodied in different forms and should not be construed as limited to the embodiments set forth herein. On the contrary, these embodiments are provided to make the present disclosure thorough and complete, and to fully convey the scope of the present disclosure to those skilled in the art.

As used herein, the term "and/or" includes any and all combinations of one or more of the associated listed items.

The terminology used herein is only for the purpose of describing specific embodiments and is not intended to limit the present disclosure. As used herein, the singular forms "a" and "the" are intended to include the plural forms as well, unless clearly dictated in the context otherwise. It will also be understood that when the terms "include" and/or "consist of" are used in this description, they specify the presence of stated features, integers, steps, operations, elements, and/or components, but do not preclude the presence or addition of one or more other features, integers, steps, operations, elements, components, and/or groups thereof.

In the following description, reference is made to "some embodiments," which describe a subset of all possible embodiments. It should be understood, however, that "some embodiments" may be the same subset or different subsets of all possible embodiments and may be combined with each other without conflict.

Unless otherwise defined, all terms (including technical and scientific terms) used herein have the same meaning as commonly understood by one of ordinary skill in the art. It will also be understood that terms, such as those defined in commonly used dictionaries, should be interpreted as having a meaning consistent with their meaning in the context of the relevant art and the present disclosure, and will not be interpreted in an idealized or overly formal sense unless expressly so defined in embodiments of the present disclosure.
1. Wireless communication in high-frequency bands has a larger communication bandwidth, which can significantly increase the capacity of communication systems. However, due to the disadvantages of high-frequency band signals, such as high path loss and being easily blocked, the coverage range of high-frequency base stations is limited. In response, the industry has proposed a Reconfigurable Intelligent Surface (RIS) for controlling the wireless environment. By dynamically adjusting the states of the electromagnetic units on the Reconfigurable Intelligent Surface, wireless signals from the base station can be reflected or transmitted to specified directions, thereby enhancing the signal coverage area.
2. Current Reconfigurable Intelligent Surface usually uses passive, reflective or transmissive units which cannot perform signal measurement. Furthermore, to improve the reflection link gain, Reconfigurable Intelligent Surface designs often employ large-scale arrays, which further increases the difficulty of channel measurement. Therefore, how to perform signal measurement on a Reconfigurable Intelligent Surface has become a technical problem which needs to be solved.
3. Based on this, embodiments of the present disclosure provide a Reconfigurable Intelligent Surface, a signal processing method, a device, and a medium, which can enable signal measurement on the Reconfigurable Intelligent Surface.

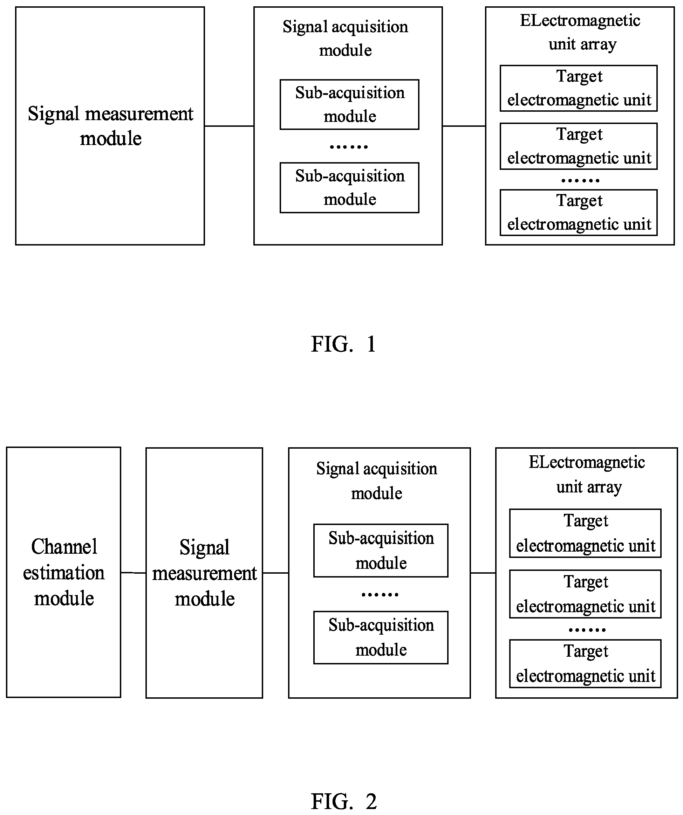

Embodiments of the present disclosure first propose a Reconfigurable Intelligent Surface. Please refer to FIG. 1, which shows a schematic diagram of a module structure of a Reconfigurable Intelligent Surface provided by embodiments of the present disclosure. As shown in FIG. 1, the Reconfigurable Intelligent Surface includes an electromagnetic unit array, a signal acquisition module, and a signal measurement module.

The electromagnetic unit array in embodiments of the present disclosure includes a plurality of target electromagnetic units.

It can be understood that the electromagnetic unit array can be a reflective array or a transmissive array. When the electromagnetic unit array is a reflective array, the Reconfigurable Intelligent Surface can reflect electromagnetic signals incident on the surface of the electromagnetic unit array at a specific angle. When the electromagnetic unit array is a transmissive array, the Reconfigurable Intelligent Surface can transmit electromagnetic signals incident on the surface of the electromagnetic unit array to a specific direction on the other side of the Reconfigurable Intelligent Surface.

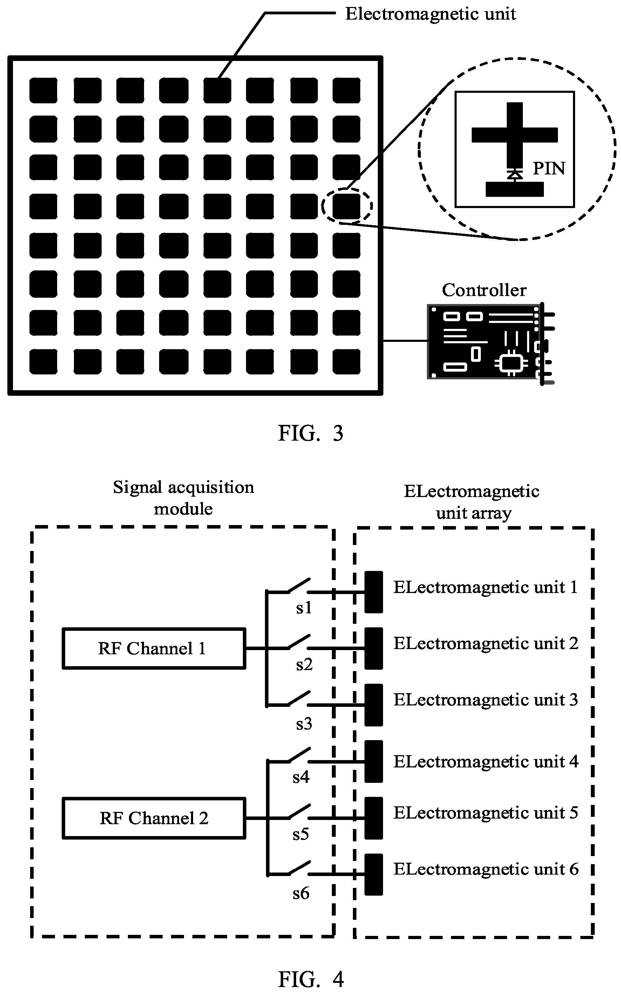

In an embodiment, the electromagnetic units in the electromagnetic unit array are arranged periodically. Referring to FIG. 3, which shows a structural schematic diagram of an electromagnetic unit array provided by an embodiment of the present disclosure, as shown in FIG. 3, the electromagnetic units in the electromagnetic unit array are arranged in a rectangular grid, forming a uniform rectangular array. The electromagnetic units in the electromagnetic unit array can also be arranged in other geometric structures, such as linear arrangement, circular arrangement, etc. Furthermore, the electromagnetic units in the electromagnetic unit array can also be arranged in a non-periodic manner according to specific applications, meaning the electromagnetic units are arranged irregularly and non-uniformly. The embodiments of the present disclosure do not impose limitations on this.

In some embodiments, the electromagnetic units are equipped with state manipulation circuits, which are configured to manipulate specific attributes of the incident signal. The specific attributes include at least one of the following: amplitude, frequency, phase, or polarization state.

It can be understood that the incident signal is an electromagnetic wave signal, and the specific attributes of the electromagnetic wave include amplitude, frequency, phase, polarization state, and so on. The term "manipulation" refers to the ability of the electromagnetic unit to alter specific attributes of the electromagnetic signal incident on its surface. For example, amplitude manipulation means that the amplitude of the electromagnetic signal incident on the surface of the electromagnetic unit differs from its original amplitude upon reflection or transmission. Similarly, phase manipulation means that the phase of the electromagnetic signal incident on the surface of the electromagnetic unit changes upon reflection or transmission, and the extent of this change is determined by the electromagnetic state of the electromagnetic unit.

It should be understood that the electromagnetic unit array is equipped with state manipulation circuits, enabling it to manipulate the incident signals on the surface of the electromagnetic unit array. This includes the manipulation of the incident signal's amplitude, frequency, phase, or polarization state. For example, as shown in FIG. 3, the state manipulation circuit on the electromagnetic unit includes a PIN diode. The state of the electromagnetic unit is controlled by adjusting the switching state of the PIN diode. For instance, under the excitation of a first input signal x1, the PIN diode is in an open-circuit state, and the change in specific attributes of the incident electromagnetic signal caused by the electromagnetic unit is a1. Under the excitation of a second input signal x2, the PIN diode is in a conducting state, and the change in specific attributes of the incident electromagnetic signal caused by the electromagnetic unit is a2. Here, the first input signal x1 and the second input signal x2 can represent different input voltage levels, and the changes a1 and a2 can represent different phase shifts. In other words, by varying the voltage level of the signal input to the electromagnetic unit, the electromagnetic unit can apply different phase delays to the incident electromagnetic signal.

All electromagnetic units in the electromagnetic unit array are equipped with corresponding state manipulation circuits, enabling each electromagnetic unit to independently adjust its own state. Through the manipulation of the incident signal by all electromagnetic units in the array, the electromagnetic unit array can reflect or transmit the electromagnetic signal incident on its surface to a specified direction.

In an embodiment, as shown in FIG. 3, the Reconfigurable Intelligent Surface also includes a controller. The controller is connected to the electromagnetic unit array and is configured to control the state manipulation circuits, thereby enabling the manipulation of the states of the electromagnetic units.

In some embodiments, an electromagnetic unit has a sub-wavelength size.

It is understandable that the electromagnetic units having a sub-wavelength size means that the size of the electromagnetic units is smaller than the wavelength of the electromagnetic waves being processed. This allows the electromagnetic units to achieve better electromagnetic manipulation performance. The size of the electromagnetic units can be designed to be half of the carrier wavelength. In practical applications, the size of the electromagnetic units can also be greater than or less than half a wavelength.

In the embodiments of the present disclosure, the signal acquisition module includes at least one sub-acquisition module. Each sub-acquisition module includes an RF channel and multiple RF switches. The RF channel is connected to multiple target electromagnetic units through the multiple RF switches. The multiple RF switches are configured to sequentially turn on to switch the target electromagnetic unit connected to the RF channel. Each RF switch switches its on state or off state in sequence according to a preset time interval, where the preset time interval is determined by the carrier period of the incident signal incident on the target electromagnetic unit.

It should be understood that the RF module in each sub-acquisition module is connected to multiple target electromagnetic units through multiple RF switches. Therefore, the number of RF channels contained in the signal acquisition module is less than the number of electromagnetic units in the electromagnetic unit array. This reduces the hardware requirements for signal acquisition and lowers the hardware cost. Therefore, each RF switch switches its state sequentially according to the time-domain characteristics of the incident signal. That is, the RF switches switch to the on state or off state sequentially in a time-division manner based on the carrier period of the incident signal, enabling the same RF channel to connect to multiple target electromagnetic units at different times to collect the electromagnetic wave signals incident on different target electromagnetic units.

It is understandable that the RF channels in the signal acquisition module can be configured to collect the amplitude or power of the incident signal on the connected target electromagnetic units. The electromagnetic wave signal incident on the target electromagnetic unit will generate an induced voltage and induced current on the electromagnetic unit. The RF channel obtains the amplitude or power of the incident signal by measuring the induced voltage and induced current on the electromagnetic unit. In the embodiments of the present disclosure, compared to the RF channels in traditional wireless base stations, the RF channels do not need to perform downconversion, demodulation, or other processing on the measured signals. Traditional baseband processing steps are not required, but only analog-to-digital conversion of the measured data is needed for storage and utilization.

It should be noted that the signal data utilized for channel estimation generally needs to be measured simultaneously. Otherwise, complex data preprocessing algorithms and channel estimation algorithms are required, along with complex baseband processing functions to assist in implementation. However, the electromagnetic signals utilized for channel estimation are time-domain periodic signals. Therefore, the embodiments of the present disclosure utilize the periodic characteristic of electromagnetic signals. By setting the RF switches to switch to the on state or off state in sequence according to the carrier period of the incident signal, the signal acquisition module can periodically collect time-domain signals. As a result, the incident signals on different electromagnetic units can be considered as signals collected simultaneously. This technical scheme greatly reduces hardware cost at the expense of a minimal increase in acquisition time.

As an example, please refer to FIG. 4. FIG. 4 shows a structural schematic diagram of the connection between a signal acquisition module and an electromagnetic unit array provided by an embodiment of the present disclosure. As shown in FIG. 4, the signal acquisition module includes a first sub-acquisition module and a second sub-acquisition module. The electromagnetic unit array includes electromagnetic unit 1 to electromagnetic unit 6. RF channel 1 in the first sub-acquisition module is connected to electromagnetic unit 1, electromagnetic unit 2, and electromagnetic unit 3 through three RF switches, s1, s2, and s3, respectively. RF channel 2 in the second sub-acquisition module is connected to electromagnetic unit 4, electromagnetic unit 5, and electromagnetic unit 6 through three RF switches, s4, s5, and s6, respectively.

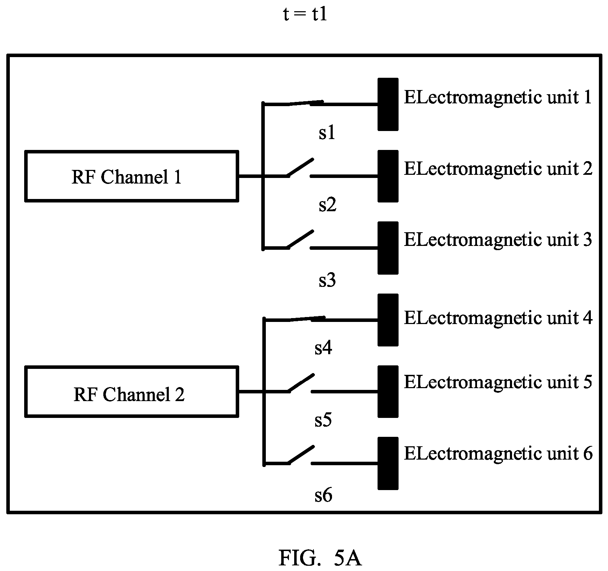

Referring to FIGs. 5A to 5C, these figures illustrate the switching states of the RF switches in FIG. 4 at time t1, time t2, and time t3. The RF switches sequentially switch to the on state or off state according to the carrier period of the incident signal.

As shown in FIG. 5A, at time t1, RF switch s1 is in an on state, while RF switches s2 and s3 are in an off state. RF channel 1 connects to electromagnetic unit 1 to collect the electromagnetic wave signal incident on electromagnetic unit 1. Meanwhile, RF switch s4 is in an on state, while RF switches s5 and s6 are in an off state. RF channel 2 connects to electromagnetic unit 1 to collect the electromagnetic wave signal incident on electromagnetic unit 1.

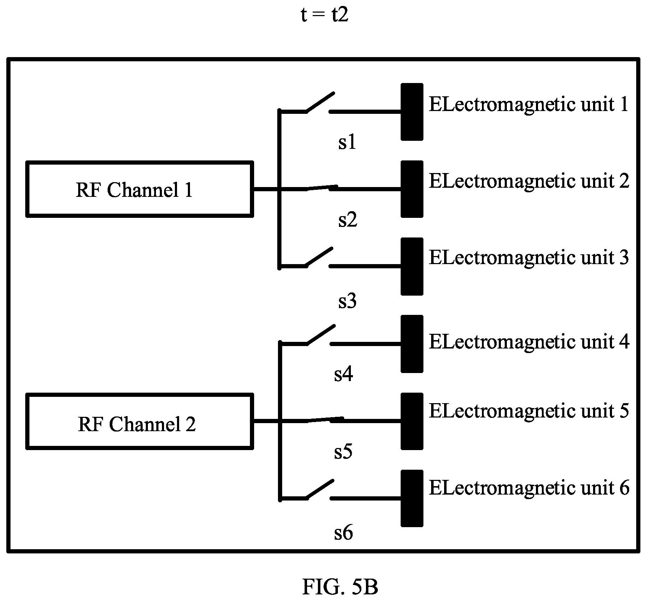

As shown in FIG. 5B, at time t2, RF switches s1 and s3 are in an off state, while RF switch s2 is in an on state. RF channel 1 connects to electromagnetic unit 2 to collect the electromagnetic wave signal incident on electromagnetic unit 2. Meanwhile, RF switches s4 and s6 are in an off state, while RF switch s5 is in an on state. RF channel 2 connects to electromagnetic unit 2 to collect the electromagnetic wave signal incident on electromagnetic unit 2.

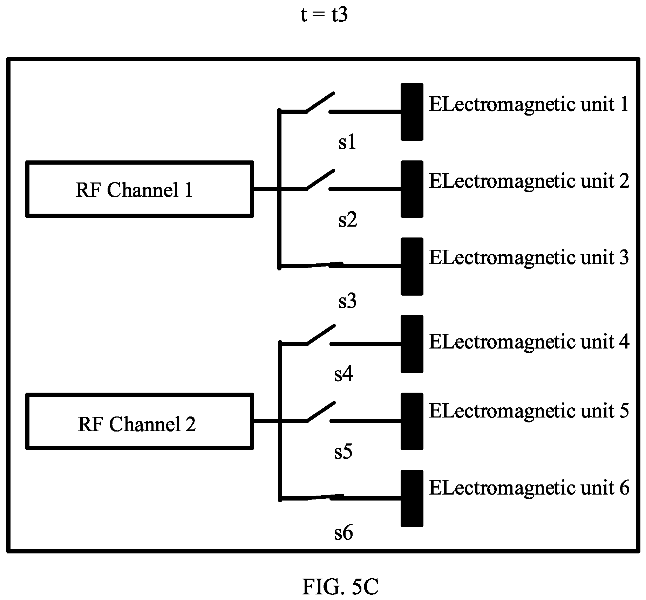

As shown in FIG. 5C, at time t3, RF switches s1 and s2 are in an off state, while RF switch s3 is in an on state. RF channel 1 connects to electromagnetic unit 3 to collect the electromagnetic wave signal incident on electromagnetic unit 3. Meanwhile, RF switches s4 and s5 are in an off state, while RF switch s6 is in an on state. RF channel 2 connects to electromagnetic unit 3 to collect the electromagnetic wave signal incident on electromagnetic unit 3.

Therefore, the incident signals on electromagnetic units connected to different RF channels can be processed simultaneously, while electromagnetic units connected to the same RF channel need to be connected and processed at different times by switching the RF switches. Here, the time intervals between time t1 and t2, and between time t2 and t3, are determined by the carrier period of the incident signal on the target electromagnetic unit.

In some embodiments, the time interval for switching the RF switch between the on state or off state is an integer multiple of the carrier period of the incident signal on the target electromagnetic unit.

It can be understood that the embodiments of the present disclosure utilize the periodic characteristic of electromagnetic signals. By switching the RF switches to the on state or off state in a time-division manner according to the carrier period of the incident signal, the signal acquisition module can periodically collect time-domain signals. For this purpose, when the RF channel in the signal acquisition module is connected to the target electromagnetic unit through multiple RF switches, the time interval for switching the RF switches to the on state or off state is set to an integer multiple of the carrier period of the incident signal on the target electromagnetic unit. This allows the RF channel to switch the connected target electromagnetic unit according to the carrier period of the incident signal, thereby collecting time-domain signals from different target electromagnetic units. For example, as shown in FIGs. 5A to 5C, at time t1, RF channel 1 is connected to electromagnetic unit 1 through RF switch s1 and completes the incident signal measurement on electromagnetic unit 1. At time t2, RF channel 1 is connected to electromagnetic unit 2 through RF switch s2 and completes the incident signal measurement on electromagnetic unit 2. At time t3, RF channel 1 is connected to electromagnetic unit 3 through RF switch s3 and completes the incident signal measurement on electromagnetic unit 3. For the same RF switch, t3 - t2 = T0 and t2 - t1 = T0' are preset values. T0 and T0' are integer multiples of the period of the incident signal, i.e., T0 = nT and T0' = mT, where T is the period of the incident signal, and n and m are integers greater than 0.

In some embodiments, the multiple target electromagnetic units include all or a portion of the electromagnetic units in the electromagnetic unit array.

It can be understood that the multiple target electromagnetic units including all electromagnetic units in the electromagnetic unit array, means that the RF channels in the signal acquisition module are connected to all electromagnetic units in the electromagnetic unit array via RF switches. Utilizing RF channels and RF switches to involve all electromagnetic units in the electromagnetic unit array for signal measurement enables the acquisition of more spatial characteristic data of the incident signal, which facilitates noise suppression and, in turn, yields more accurate channel estimation results. Alternatively, the multiple target electromagnetic units including a portion of the electromagnetic units in the electromagnetic unit array, means that the RF channels in the signal acquisition module are connected via RF switches only to a subset of the electromagnetic units in the electromagnetic unit array. Utilizing RF channels and RF switches to involve only a portion of the electromagnetic units in the electromagnetic unit array for signal measurement, under the condition that the electromagnetic units in the electromagnetic unit array are periodically arranged, the incident electromagnetic wave signals also exhibit periodic distribution characteristics on the electromagnetic unit array. Therefore, collecting incident signals from a subset of electromagnetic units can represent the complete incident signal information, thereby reducing the required number of RF channels and RF switches and lowering the hardware cost and design complexity of the Reconfigurable Intelligent Surface.

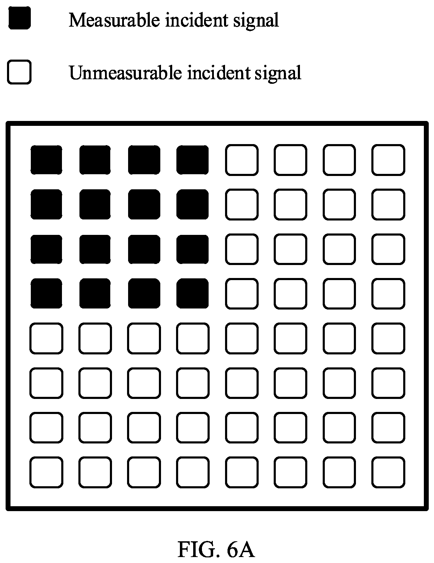

It should be understood that when the multiple target electromagnetic units include only a portion of the electromagnetic units in the electromagnetic unit array, electromagnetic units at specific positions and in specific quantities can be selected for collecting the incident signal based on the arrangement pattern of the electromagnetic units in the array. Refer to FIGs. 6A through 6C, which respectively illustrate the distribution of target electromagnetic units on the electromagnetic unit array in embodiments of the present disclosure. As shown in FIGs. 6A through 6C, the electromagnetic units in this array are arranged in a uniform rectangular grid. Here, the incident signals on the target electromagnetic units connected to the signal measurement module are considered measurable incident signals, while those on the target electromagnetic units not connected to the signal measurement module are considered unmeasurable incident signals.

In FIG. 6A, multiple target electromagnetic units within a rectangular area in the upper-left corner of the electromagnetic unit array are selected for the collection and measurement of incident signals. This means that the RF channels in the signal acquisition module are connected, via multiple RF switches, to these multiple target electromagnetic units within the rectangular area. It should be noted that the aforementioned rectangular area can be located at other positions within the electromagnetic unit array, and the size of the rectangular area-i.e., the number of target electromagnetic units-can also be adjusted according to actual requirements.

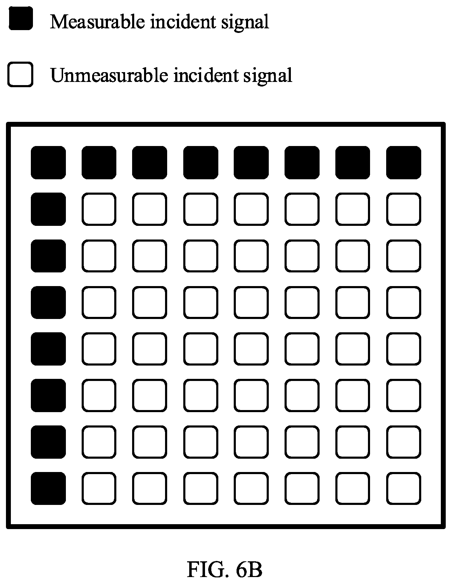

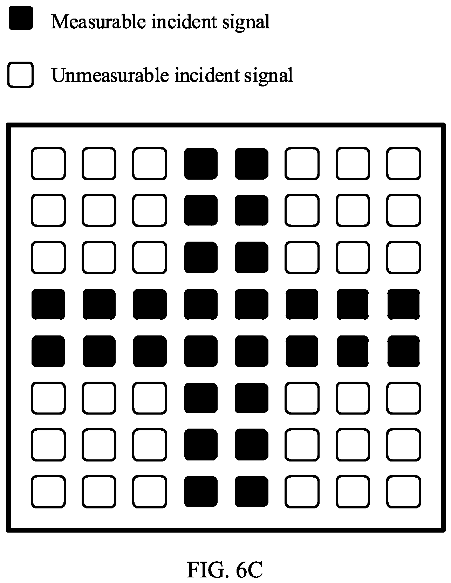

In FIG. 6B, multiple target electromagnetic units located in the first row and first column of the electromagnetic unit array are selected for the collection and measurement of incident signals. This means that the RF channels in the signal acquisition module are connected, via multiple RF switches, to the multiple target electromagnetic units positioned in the first row and first column. As another example, shown in FIG. 6C, multiple target electromagnetic units located in the middle two rows and middle two columns of the electromagnetic unit array are selected for the collection and measurement of incident signals. That is, the RF channels in the signal acquisition module are connected, via multiple RF switches, to the multiple target electromagnetic units positioned in the middle two rows and middle two columns. It should be noted that, in practical applications, electromagnetic units located in other rows or columns, or even multiple rows and columns, can also be selected for the collection and measurement of incident signals. The selection of specific rows and columns for the target electromagnetic units within the electromagnetic unit array may be determined based on the complexity of routing the RF switch circuitry.

In some embodiments, the RF channel includes an amplification circuit designed to amplify the incident signal, thereby improving the accuracy of signal measurements. Since incident signals reaching the electromagnetic unit array may be weak, an amplification circuit can be incorporated into the RF channel to amplify the incident signal, facilitating subsequent collection and measurement.

In an embodiment, the amplification circuit includes a Low-Noise Amplifier (LNA). While amplifying the signal, the LNA minimizes the noise added to the signal as much as possible, which can further enhance the accuracy of signal measurement.

In the embodiments of the present disclosure, the signal measurement module is configured to measure the incident signals from the target electromagnetic units connected to the RF channels, thereby obtaining incident signal measurement data.

It can be understood that the signal measurement module is connected to the signal acquisition module and is configured to measure the incident signals from the target electromagnetic units connected to the RF channels. This involves analyzing and quantifying the raw incident signal data collected by the RF channels, including measuring parameters such as the phase and polarization state of the incident signals. The result is incident signal measurement data, completing the signal measurement on the Reconfigurable Intelligent Surface.

In some embodiments, the Reconfigurable Intelligent Surface further includes:
A channel estimation module, which is configured to perform channel estimation based on the incident signal measurement data, thereby obtaining estimated channel information.

It should be understood that the channel estimation module is connected to the signal measurement module and is configured to perform channel estimation based on the incident signal measurement data obtained by the signal measurement module, thereby deriving estimated channel information. The Reconfigurable Intelligent Surface provided by the embodiments of the present disclosure collects incident signals from multiple electromagnetic units through RF channels, which can constitute the spatial distribution data of the incident signals. This spatial distribution data implicitly contains the channel information of the incident signals. Therefore, the incident signal measurement data can be utilized to estimate the channel state and serve the intelligent beam control of the Reconfigurable Intelligent Surface.

In some embodiments, the channel estimation module is configured to: perform a Fourier Transform on the incident signal measurement data to obtain the coordinates of a maximal value in the transform domain, and determine the estimated channel information based on the coordinates of the maximal value.

It is understandable that before performing the Fourier Transform on the incident signal measurement data, preprocessing such as noise reduction, data padding, and rearrangement can be applied to the incident signal measurement data, ultimately forming a one-dimensional, two-dimensional, or three-dimensional array. Subsequently, based on the dimensionality of the incident signal measurement data, a one-dimensional, two-dimensional, or three-dimensional Fourier Transform is chosen to convert the incident signal measurement data from spatial distribution data to the wavenumber domain. This yields the coordinates of the maximal value of the incident signal measurement data in the wavenumber domain. Since the incident signal measurement data exhibits periodic characteristics in the spatial domain, it will demonstrate sparsity in the wavenumber domain. Therefore, the channel information can be determined by the extreme values in the wavenumber domain. For an incident plane wave in the far field, the channel information can be represented by the angle of incidence, and the angle of incidence (*θᵢ, φᵢ*) is related to the coordinates of the maximal value in the transform domain (*xᵢ, yᵢ*) by the following equation: ${φ}_{i} = arctan \left(\frac{{y}_{i}}{{x}_{i}}\right) ;$ ${θ}_{i} = arcsin \left[\frac{1}{α}\sqrt{{\left(\frac{{{x}^{˜}}_{i}}{{N}_{x}}\right)}^{2} + {\left(\frac{{{y}^{˜}}_{i}}{{N}_{y}}\right)}^{2}}\right] ;$ where, ${{x}^{˜}}_{i} = \left\{\begin{matrix}{x}_{i} , & {x}_{i} \leq {N}_{x} / 2 \\ {N}_{x} - {x}_{i} , & otherwise\end{matrix}\right. , {{y}^{˜}}_{i} = \left\{\begin{matrix}{y}_{i} , & {y}_{i} \leq {N}_{y} / 2 \\ {N}_{y} - {y}_{i} , & otherwise\end{matrix}\right. ;$

*Nₓ* and *N_{y}* are the number of electromagnetic units in the first direction and the second direction of the electromagnetic unit array, respectively. *α* is the ratio of the electromagnetic unit spacing to the carrier wavelength. When the electromagnetic unit spacing is half-wavelength, *α* = 0.5). According to equations (1) to (3), channel estimation can be achieved.

In some embodiments, the channel estimation module is configured to: construct the complex spatial distribution data of the incident signal based on the incident signal measurement data; perform a Fourier Transform on the complex spatial distribution data to obtain the coordinates of the maximal value in the transform domain; and determine the estimated channel information based on the coordinates of the maximal value.

It should be noted that constructing the complex spatial distribution data of the incident signal based on the incident signal measurement data can involve: acquiring the first incident signal measurement data and the second incident signal measurement data obtained through measurement within a preset time interval; using the first incident signal measurement data as the real part and the second incident signal measurement data as the imaginary part to construct the complex spatial distribution data of the incident signal.

It is understandable that before constructing the complex spatial distribution data, preprocessing can be performed on the incident signal measurement data S1 and S2, such as noise reduction, data padding, and rearrangement, ultimately forming a one-dimensional, two-dimensional, or three-dimensional array. Here, the incident signal measurement data S1 and S2 are measured within a preset time interval. Subsequently, the complex spatial distribution data of the incident signal is constructed based on the incident signal measurement data. Specifically, S1 and S2 are combined to form the complex spatial distribution data S=S1+jS2, where j is the imaginary unit. Since the incident signal measurement data includes the amplitude and power of the incident signal, S1 and S2 are real matrices. Directly applying a Fourier Transform would produce two components, which is not conducive to channel information extraction. However, combining S1 and S2 into a complex distribution eliminates phase ambiguity in the Fourier Transform domain, enabling more accurate acquisition of channel information. Afterward, a Fourier Transform is performed on the complex spatial distribution data. Depending on the dimensionality of the incident signal measurement data, a one-dimensional, two-dimensional, or three-dimensional Fourier Transform can be chosen to transform the incident signal measurement data from spatial distribution data to the wavenumber domain, obtaining the coordinates of the maximal value of the incident signal measurement data in the wavenumber domain. Since the incident signal measurement data exhibits periodic characteristics in the spatial domain, it will demonstrate sparsity in the wavenumber domain. Therefore, channel information can be determined by the extreme values in the wavenumber domain. For an incident plane wave in the far field, channel information can be represented by the incident angle. The incident angle (*θᵢ, φᵢ*) and the coordinates of the maximal value in the transform domain (*xᵢ, yᵢ*) are determined according to equations (1) to (3).

It should be noted that the above embodiments describe channel estimation using Discrete Fourier Transform (DFT) and extremum search algorithms. In practical applications, other methods such as fractional Fourier Transform, Laplace Transform, cosine transform, Wigner Transform, or short-time Fourier Transform can also be utilized for channel information extraction. Furthermore, in channel estimation according to embodiments of the present disclosure, filtering algorithms (such as smoothing filters) can also be employed to remove noise, burst interference, or other irrelevant signal components, thereby improving the accuracy of channel estimation.

In some embodiments, the Reconfigurable Intelligent Surface further includes:
A frequency selective module, formed on the upper front surface of the electromagnetic unit array, is configured to allow only incident signals within a specific frequency band to reach the surface of the electromagnetic unit array.

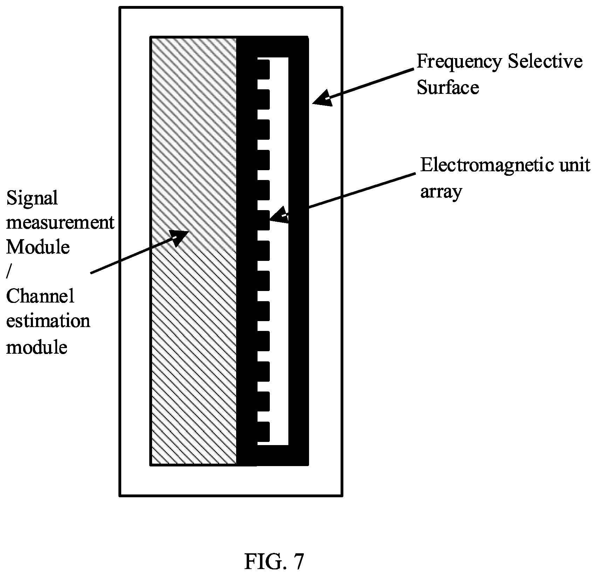

It is understandable that a frequency selective module is arranged on the upper front surface of the electromagnetic unit array, and the frequency selective module is configured for spatial filtering. Since signals of various frequency bands exist in the environment, signals outside the carrier frequency band can cause interference with signal measurement. To mitigate the interference caused by signals outside the carrier frequency band on signal measurement, embodiments of the present disclosure arrange a frequency selective module on the upper front surface of the electromagnetic unit array. The frequency selective module is configured to filter out out-of-band signals incident on the electromagnetic unit array, allowing only incident signals within the carrier frequency band to reach the surface of the electromagnetic unit array. Please refer to FIG. 7, which illustrates a spatial structural schematic diagram of a Reconfigurable Intelligent Surface provided by an embodiment of the present disclosure. As shown in FIG. 7, a Frequency Selective Surface (FSS) is arranged on the receiving side of the electromagnetic unit array. The FSS is composed of periodically arranged conductive elements, forming a surface structure with specific frequency response characteristics which can selectively transmit, reflect, or absorb electromagnetic waves within a specific frequency range. By arranging the FSS on the receiving side of the electromagnetic unit array, a pre-filtering effect can be achieved.

The Reconfigurable Intelligent Surface according to embodiments of the present disclosure includes an electromagnetic unit array, a signal acquisition module, and a signal measurement module. The electromagnetic unit array includes multiple target electromagnetic units. The signal acquisition module includes at least one sub-acquisition module, each of which includes an RF channel and multiple RF switches. The RF channel is connected to multiple target electromagnetic units through the multiple RF switches. The multiple RF switches are configured to switch and connect the RF channel to different target electromagnetic units in turn by turning on the target electromagnetic units sequentially. Each RF switch switches its on state or off state according to a preset time interval, which is determined by the carrier period of the incident signal reaching the target electromagnetic unit. The signal measurement module is configured to measure the incident signal from the target electromagnetic unit connected to the RF channel, thereby obtaining incident signal measurement data. In embodiments of the present disclosure, the RF channel in the signal acquisition module is connected to multiple target electromagnetic units through multiple RF switches. Each RF switch sequentially switches its on state or off state according to the carrier period of the incident signal. This enables a single RF channel to connect to multiple target electromagnetic units in a time-division manner, allowing for the measurement of incident signals from the target electromagnetic units connected to the RF channel. Incident signal measurement data is thus obtained, enabling signal measurement on the Reconfigurable Intelligent Surface. Meanwhile, the RF channel is connected to multiple target electromagnetic units through multiple RF switches. This configuration allows a small number of RF channels to connect to a large number of target electromagnetic units configured for incident signal measurement, thereby reducing the hardware cost and design complexity of the Reconfigurable Intelligent Surface.

Embodiments of the present disclosure also propose a signal processing method applied to a Reconfigurable Intelligent Surface. The Reconfigurable Intelligent Surface includes an electromagnetic unit array and a signal acquisition module. The electromagnetic unit array includes multiple target electromagnetic units. The signal acquisition module includes at least one sub-acquisition module, each of which includes an RF channel and multiple RF switches. The RF channel is connected to multiple target electromagnetic units through the multiple RF switches.

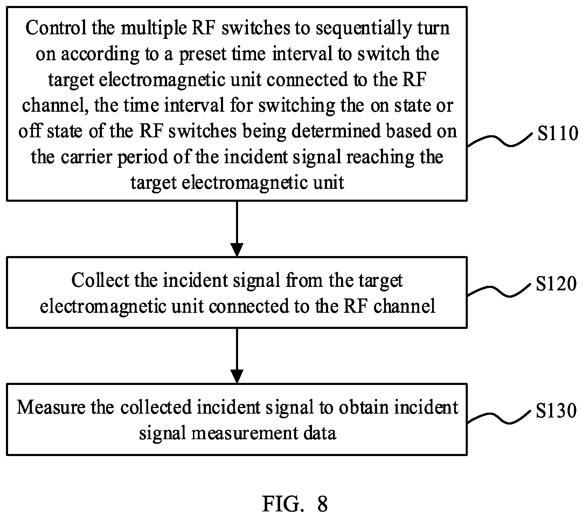

Please refer to FIG. 8, which illustrates a signal processing method provided by an embodiment of the present disclosure. As shown in FIG. 8, the signal processing method includes, but is not limited to, steps S110 to S130.

Step S110: Controlling the multiple RF switches to sequentially turn on according to a preset time interval to switch the target electromagnetic unit connected to the RF channel. The time interval for switching the on state or off state of the RF switches is determined based on the carrier period of the incident signal reaching the target electromagnetic unit.

Step S120: Collecting the incident signal from the target electromagnetic unit connected to the RF channel.

Step S130: Measuring the collected incident signal to obtain incident signal measurement data.

It should be understood that the multiple RF switches are controlled to sequentially turn on according to the time interval determined by the carrier period of the incident signal reaching the target electromagnetic unit, thereby the target electromagnetic unit connected to the RF channel is switched. At any given moment, only one RF switch among the multiple RF switches connected to the same RF channel is in an on state. When controlling one of the multiple RF switches connected to the RF channel to switch to an on state, the incident signal from the target electromagnetic unit connected to the RF channel can be collected. Subsequently, the collected incident signal is measured for further analysis and quantification, resulting in incident signal measurement data. This enables signal measurement on the Reconfigurable Intelligent Surface.

For example, as shown in FIG. 4, the signal acquisition module includes RF channel 1, RF channel 2, and RF switches s1 to s6. The electromagnetic unit array includes electromagnetic units 1 to 6. RF channel 1 is connected to electromagnetic unit 1, electromagnetic unit 2, and electromagnetic unit 3 via RF switches s1, s2, and s3, respectively. RF channel 2 is connected to electromagnetic unit 4, electromagnetic unit 5, and electromagnetic unit 6 via RF switches s4, s5, and s6, respectively. As shown in FIGs. 5A to 5B, for RF channel 1, at time t1, RF switch s1 is controlled to turn on while RF switches s2 and s3 are in off state, switching the target electromagnetic unit connected to the RF channel to electromagnetic unit 1. At time t2, RF switch s2 is controlled to turn on while RF switches s1 and s3 are in off state, switching the target electromagnetic unit to electromagnetic unit 2. At time t3, RF switch s3 is controlled to turn on while RF switches s1 and s2 are in off state, switching the target electromagnetic unit to electromagnetic unit 3. For RF channel 2, at time t1, RF switch s4 is controlled to turn on while RF switches s5 and s6 are in off state, switching the target electromagnetic unit to electromagnetic unit 4. At time t2, RF switch s5 is controlled to turn on while RF switches s4 and s6 are in off state, switching the target electromagnetic unit to electromagnetic unit 5. At time t3, RF switch s6 is controlled to turn on while RF switches s4 and s5 are in off state, switching the target electromagnetic unit to electromagnetic unit 6. Here, t2-t1 and t3-t2 represent the time interval determined by the carrier period of the incident signal reaching the target electromagnetic unit. In other words, for RF channel 1, RF switches s1, s2, and s3 are controlled to sequentially turn on according to the preset time interval, enabling RF channel 1 to connect to electromagnetic unit 1, electromagnetic unit 2, and electromagnetic unit 3 in a time-division manner. Similarly, for RF channel 2, RF switches s4, s5, and s6 are controlled to sequentially turn on according to the preset time interval, enabling RF channel 2 to connect to electromagnetic unit 4, electromagnetic unit 5, and electromagnetic unit 6 in a time-division manner. Furthermore, at time t1, the incident signal from electromagnetic unit 1 connected to RF channel 1 and the incident signal from electromagnetic unit 4 connected to RF channel 2 are collected. These collected incident signals are measured to obtain the incident signal measurement data S1 and S4. At time t2, the incident signal from electromagnetic unit 2 connected to RF channel 1 and the incident signal from electromagnetic unit 5 connected to RF channel 2 are collected and measured to obtain the incident signal measurement data S2 and S5. At time t3, the incident signal from electromagnetic unit 3 connected to RF channel 1 and the incident signal from electromagnetic unit 6 connected to RF channel 2 are collected and measured to obtain the incident signal measurement data S3 and S6.

In some embodiments, the time interval for switching the RF switch between the on state or off state is an integer multiple of the carrier period of the incident signal on the target electromagnetic unit.

It should be noted that the above embodiment describes the time interval for switching the on state or off state of the RF switches as an integer multiple of the carrier period of the incident signal reaching the target electromagnetic unit. The detailed explanation and technical effects of the above embodiment can be referred to the description provided in the embodiments of the present disclosure regarding the Reconfigurable Intelligent Surface and will not be repeated here.

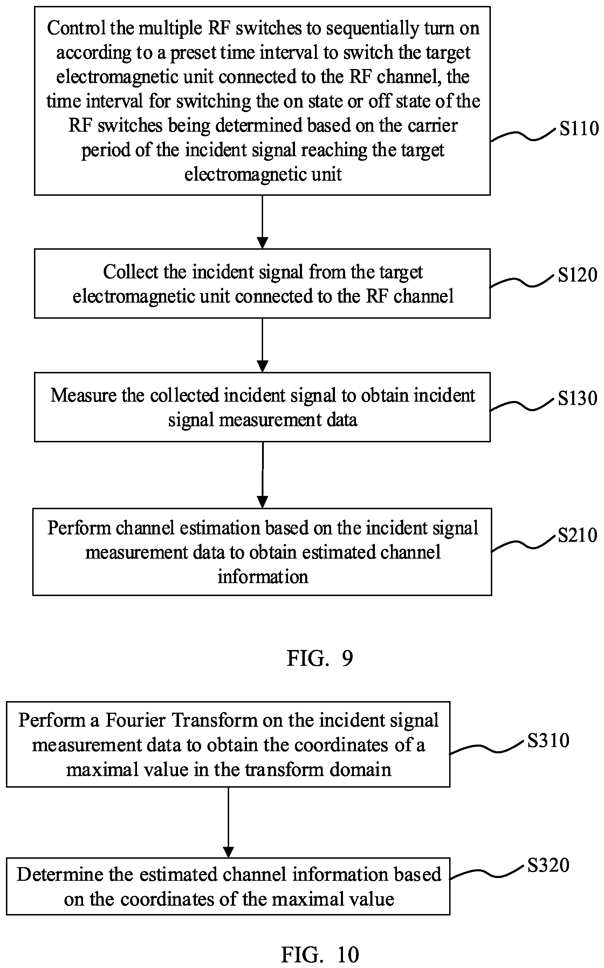

In some embodiments, please refer to FIG. 9, which illustrates a signal processing method provided by an embodiment of the present disclosure. As shown in FIG. 9, after obtaining the incident signal measurement data, the method further includes step S210.

Step S210: Performing channel estimation based on the incident signal measurement data to obtain estimated channel information.

It should be understood that by collecting the incident signals on multiple electromagnetic units through the RF channels, spatial distribution data of the incident signals can be formed. This spatial distribution data implicitly contains the channel information of the incident signals. Therefore, the incident signal measurement data can be utilized to estimate the channel state, which in turn serves the intelligent beam control of the Reconfigurable Intelligent Surface.

In some embodiments, please refer to FIG. 10, which illustrates a schematic flowchart of sub-steps within step S210 from FIG. 9. As shown in FIG. 10, performing channel estimation based on the incident signal measurement data to obtain estimated channel information includes step S310 and step S320.

Step S310: Performing a Fourier Transform on the incident signal measurement data to obtain the coordinates of a maximal value in the transform domain.

Step S320: Determining the estimated channel information based on the coordinates of the maximal value.

It should be noted that the explanation of steps S310 to S320 described in the above embodiment, which perform channel estimation on the incident signal measurement data through Discrete Fourier Transform (DFT), can be referred to in the description provided in the embodiments of the present disclosure regarding the Reconfigurable Intelligent Surface and will not be repeated here.

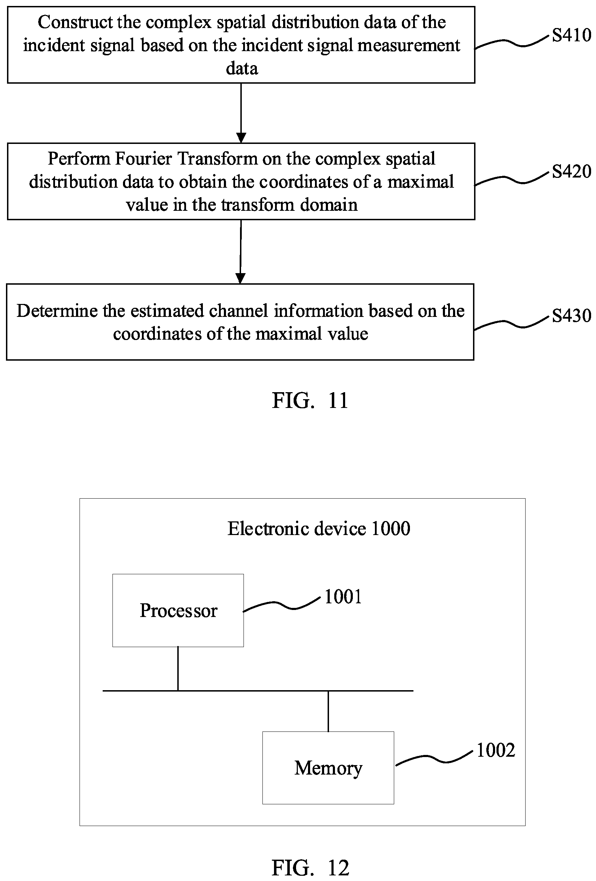

In some embodiments, please refer to FIG. 11, which illustrates a schematic flowchart of sub-steps within step S210 from FIG. 9. As shown in FIG. 11, performing channel estimation based on the incident signal measurement data to obtain estimated channel information includes steps S410 to S430.

Step S410: Constructing the complex spatial distribution data of the incident signal based on the incident signal measurement data.

Step S420: Performing Fourier Transform on the complex spatial distribution data to obtain the coordinates of a maximal value in the transform domain.

Step S430: Determining the estimated channel information based on the coordinates of the maximal value.

It should be noted that the specific explanation of steps S410 to S430 described in the above embodiment, which perform channel estimation on the incident signal measurement data through an extremum search method, can be referred to in the description provided in the embodiments of the present disclosure regarding the Reconfigurable Intelligent Surface and will not be repeated here.

In some embodiments, the incident signal measurement data includes the amplitude of the incident signal or the power of the incident signal.

It should be understood that electromagnetic wave signals incident on the target electromagnetic unit will generate induced voltage and induced current on the electromagnetic unit. By measuring the induced voltage and induced current on the electromagnetic unit, the amplitude or power of the incident signal can be obtained.

In some embodiments, the multiple target electromagnetic units include all or a portion of the electromagnetic units in the electromagnetic unit array.

It should be noted that the above embodiment describes that the multiple target electromagnetic units include all or a portion of the electromagnetic units in the electromagnetic unit array. The explanation and technical effects can be referred to in the description provided in the embodiments of the present disclosure regarding the Reconfigurable Intelligent Surface and will not be repeated here.

The signal processing method provided by the embodiments of the present disclosure is applied to a Reconfigurable Intelligent Surface. The Reconfigurable Intelligent Surface includes an electromagnetic unit array and a signal acquisition module. The electromagnetic unit array includes multiple target electromagnetic units. The signal acquisition module includes at least one sub-acquisition module. Each sub-acquisition module includes an RF channel and multiple RF switches. The RF channel is connected to the multiple target electromagnetic units through the multiple RF switches. The signal processing method includes controlling the multiple RF switches to sequentially turn on according to a preset time interval to switch the target electromagnetic unit connected to the RF channel, where the time interval for switching the on state or off state of the RF switches is determined based on the carrier period of the incident signal to the target electromagnetic unit. Subsequently, the incident signal of the target electromagnetic unit connected to the RF channel is collected, and the collected incident signal is measured to obtain the incident signal measurement data. In the embodiments of the present disclosure, controlling multiple RF switches to sequentially turn on according to the carrier period of the incident signal to switch the target electromagnetic unit connected to the RF channel enables the same RF channel to connect to multiple target electromagnetic units in a time-division manner. This fully utilizes the periodic characteristic of the incident signal in the time domain, connects a majority of target electromagnetic units for incident signal measurement with a minority of RF channels, thereby reducing hardware cost and design complexity. Furthermore, the signal processing method also performs channel estimation based on the spatial distribution data of the incident signal acquired by the Reconfigurable Intelligent Surface, fully leveraging the spatial distribution characteristics of the incident signal. This significantly improves channel estimation performance, simplifies the channel estimation algorithm, and is beneficial for reducing the channel estimation complexity of large-scale arrays.

Please refer to FIG. 12. The embodiments of the present disclosure also provide an electronic device 1000. The electronic device 1000 includes, but is not limited to:
At least one processor 1001;
At least one memory 1002, configured to store at least one program;
When the at least one program is executed by the at least one processor 1001, the signal processing method described in any of the above embodiments is performed.

It should be understood that the processor 1001 and the memory 1002 may be connected via a bus or other means.

It should be understood that the processor 1001 may be a Central Processing Unit (CPU). The processor may also be another general-purpose processor, a Digital Signal Processor (DSP), an Application Specific Integrated Circuit (ASIC), a Field Programmable Gate Array (FPGA), or other programmable logic devices, discrete gate or transistor logic devices, discrete hardware components, etc. The general-purpose processor may be a microprocessor, or the processor may also be any conventional processor, etc. Alternatively, the processor 1001 may employ one or more integrated circuits to execute related programs, thereby implementing the technical scheme provided by embodiments of the present disclosure.

The memory 1002, as a non-transitory computer-readable storage medium, may be configured to store non-transitory software programs and non-transitory computer-executable programs, such as the signal processing method executed on the electronic device described in any embodiment of the present disclosure. The processor 1001 executes the non-transitory software programs and instructions stored in the memory 1002, thereby implementing the signal processing method described in any of the above embodiments.

The memory 1002 may include a program storage area and a data storage area. The program storage area can store the operating system and applications required for at least one function, while the data storage area can store data used in executing the aforementioned signal processing method.

Furthermore, the memory 1002 may include high-speed random access memory and may also include non-transitory memory, such as at least one magnetic disk storage device, flash memory device, or other non-transitory solid-state storage devices.

In some implementations, the memory 1002 may include memory remotely located relative to the processor 1001. These remote memories can be connected to the processor 1001 via a network. Examples of the aforementioned network include, but are not limited to, the Internet, intranets, local area networks, mobile communication networks, and combinations thereof.

The non-transitory software programs and instructions required to implement the aforementioned signal processing method are stored in the memory 1002. When executed by one or more processors 1001, the signal processing method described in any of the above embodiments is performed.

Embodiments of the present disclosure further provide a computer-readable storage medium. The computer-readable storage medium stores a computer program, and when the computer program is executed by a processor, the signal processing method described in any of the above embodiments is implemented.

The computer storage medium of the embodiments of the present disclosure may adopt any combination of one or more computer-readable media. The computer-readable medium may be a computer-readable signal medium or a computer-readable storage medium. Examples of the computer-readable storage medium include, but are not limited to, electrical, magnetic, optical, electromagnetic, infrared, or semiconductor systems, apparatuses, or devices, or any combination thereof. More specific examples (non-exhaustive) of the computer-readable storage medium include: electrical connections with one or more wires, portable computer diskettes, hard disks, random access memory (RAM), read-only memory (ROM), erasable programmable read-only memory (EPROM or flash memory), optical fibers, portable compact disc read-only memory (CD-ROM), optical storage devices, magnetic storage devices, or any suitable combination thereof. In the present disclosure, a computer-readable storage medium may be any tangible medium that contains or stores a program, which can be used by or in combination with an instruction execution system, apparatus, or device.

A computer-readable signal medium may include a propagated data signal in baseband or as part of a carrier wave, carrying computer-readable program code therein. Such a propagated data signal may take various forms, including but not limited to electromagnetic signals, optical signals, or any suitable combination thereof. A computer-readable signal medium may also be any computer-readable medium other than a computer-readable storage medium, which can transmit, propagate, or transport a program for use by or in combination with an instruction execution system, apparatus, or device.

Program code contained on a computer-readable medium may be transmitted using any appropriate medium, including, but not limited to, wireless, wireline, optical fiber cable, RF, etc., or any suitable combination thereof.

Computer program code for carrying out operations of the present disclosure may be written in one or more programming languages or a combination thereof. These programming languages include object-oriented programming languages-such as Java, Smalltalk, C++, as well as conventional procedural programming languages-such as the "C" language or similar programming languages. The program code may execute entirely on the user's computer, partly on the user's computer, as a stand-alone software package, partly on the user's computer and partly on a remote computer, or entirely on the remote computer or server. In scenarios involving a remote computer, the remote computer may be connected to the user's computer through any type of network, including a local area network (LAN) or a wide area network (WAN), or it may be connected to an external computer (for example, through an Internet service provider via the Internet).

Embodiments of the present disclosure also provide a computer program product. The computer program product stores program instructions which, when executed on a computer device, cause the computer device to implement the signal processing method described in any of the above embodiments.

While several examples of preferred implementations of the present disclosure have been described above, the present disclosure is not limited to these implementations. Those skilled in the art, under the condition of sharing without departing from the nature of the present disclosure, may also make various equivalent modifications or substitutions. All such equivalent modifications or substitutions are encompassed within the scope defined by the present disclosure.

## Claims

1. A Reconfigurable Intelligent Surface, comprising:
an electromagnetic unit array, comprising a plurality of target electromagnetic units;
a signal acquisition module, comprising at least one sub-acquisition module, each of the sub-acquisition module comprising an RF channel and a plurality of RF switches, the RF channel being connected to the target electromagnetic units via the RF switches, the RF switches being configured to sequentially turn on to switch the target electromagnetic unit which the RF channel is connected to, each of the RF switches switching an on state or off state of the RF switch in sequence according to a preset time interval, the preset time interval being determined by a carrier period of an incident signal incident on the target electromagnetic unit; and
a signal measurement module, configured to perform signal measurement on the incident signal from the target electromagnetic unit connected to the RF channel, to obtain incident signal measurement data.

2. The Reconfigurable Intelligent Surface according to claim 1, wherein the electromagnetic unit is provided with a state manipulation circuit, the state manipulation circuit being configured to manipulate a specific property of the incident signal, wherein the specific property comprises at least one of: amplitude, frequency, phase, or polarization state.

3. The Reconfigurable Intelligent Surface according to claim 1, further comprising:
a channel estimation module, configured to perform channel estimation based on the incident signal measurement data to obtain estimated channel information.

4. The Reconfigurable Intelligent Surface according to claim 3, wherein the channel estimation module is configured to:
perform Fourier Transform on the incident signal measurement data to obtain coordinates of a maximal value in a transform domain, and determine the estimated channel information based on the coordinates of the maximal value;
or,
construct complex spatial distribution data of an incident signal based on the incident signal measurement data, perform Fourier Transform on the complex spatial distribution data to obtain coordinates of a maximal value in a transform domain, and determine the estimated channel information based on the coordinates of the maximal value.

5. The Reconfigurable Intelligent Surface according to claim 1, further comprising:
a frequency selective module formed at an upper front surface of the electromagnetic unit array, configured to allow only incident signals of a specific frequency band to be incident on a surface of the electromagnetic unit array.

6. The Reconfigurable Intelligent Surface according to claim 1, wherein the time interval for switching the on state or off state of the RF switch is an integer multiple of the carrier period of the incident signal incident on the target electromagnetic unit.

7. The Reconfigurable Intelligent Surface according to claim 1, wherein the target electromagnetic units comprise all or a portion of the electromagnetic units in the electromagnetic unit array.

8. The Reconfigurable Intelligent Surface according to claim 7, wherein the electromagnetic unit has a sub-wavelength size.

9. A signal processing method, which is applied to a Reconfigurable Intelligent Surface, wherein the Reconfigurable Intelligent Surface comprises an electromagnetic unit array and a signal acquisition module, the electromagnetic unit array comprises a plurality of target electromagnetic units, the signal acquisition module comprises at least one sub-acquisition module, each of the sub-acquisition module comprises an RF channel and a plurality of RF switches, and the RF channel is connected to the target electromagnetic units through the RF switches;
the method comprises:
controlling the RF switches to sequentially turn on at a preset time interval to switch the target electromagnetic unit to which the RF channel is connected, wherein the time interval for switching an on state or off state of the RF switch is determined based on a carrier period of an incident signal incident on the target electromagnetic unit;
collecting the incident signal from the target electromagnetic unit to which the RF channel is connected; and
performing signal measurement on the collected incident signal to obtain incident signal measurement data.

10. The method according to claim 9, wherein the time interval for switching the on state or off state of the RF switch is an integer multiple of the carrier period of the incident signal incident on the target electromagnetic unit.

11. The method according to claim 9, wherein after obtaining the incident signal measurement data, the method further comprises:
performing channel estimation based on the incident signal measurement data to obtain estimated channel information.

12. The method according to claim 11, wherein performing channel estimation based on the incident signal measurement data to obtain the estimated channel information comprises:
performing Fourier Transform on the incident signal measurement data to obtain coordinates of a maximal value in a transform domain; and
determining the estimated channel information based on the coordinates of the maximal value.

13. The method according to claim 11, wherein performing channel estimation based on the incident signal measurement data to obtain the estimated channel information comprises:
constructing complex spatial distribution data of the incident signal based on the incident signal measurement data;
performing Fourier Transform on the complex spatial distribution data to obtain coordinates of a maximal value in a transform domain; and
determining the estimated channel information based on the coordinates of the maximal value.

14. The method according to claim 13, wherein constructing the complex spatial distribution data of the incident signal based on the incident signal measurement data comprises:
acquiring first incident signal measurement data and second incident signal measurement data obtained through measurement within a preset time interval; and
constructing the complex spatial distribution data of the incident signal by using the first incident signal measurement data as a real part and the second incident signal measurement data as an imaginary part.

15. The method according to any one of claims 9 to 14, wherein the incident signal measurement data comprises amplitude or power of the incident signal.

16. The method according to any one of claims 9 to 14, wherein the target electromagnetic units comprise all or a portion of the electromagnetic units in the electromagnetic unit array.

17. An electronic device, comprising:
one or more processors;
a memory having one or more programs stored thereon, wherein when the one or more programs are executed by the one or more processors, the one or more processors are caused to implement:
the signal processing method according to any one of claims 9 to 16.

18. A computer-readable storage medium having a computer program stored thereon, wherein when the program is executed by a processor, the processor implements:
the signal processing method according to any one of claims 9 to 16.
